# EUROPEAN PATENT APPLICATION

(11) **EP 1 591 051 A1**
(43) Date of publication of application: **02.11.2005**
(21) Application number: 04257651.2
(22) Date of filing: 09.12.2004
(51) Int. Cl.: A47J 47/01, G01F 11/24

(54) **Device for discharging substance**

(30) Priority: 28.04.2004 US 833189
(71) Applicant: Eastern Sources Housewares (Hong Kong) Limited, Kowloon, Hong Kong (CN)
(72) Inventor: Lau, Wing Chung Joseph, 550 Victoria Road Pokfulam Hong Kong (CN); Lai, Wai Hing, Tat Chee Avenue Kowloon Hong Kong (CN)
(74) Representative: Howe, Steven

(57) **Abstract**

A device for discharging at least one substance therefrom, comprising a container having a body member with substantially a vertical wall and a closure member, the body member is provided with an upper opening via which the substance is received and a lower opening closable by the closure member, wherein the body member and said closure member together define a cavity for containing the substance and wherein the body member and the closure member is movable relative to each other for discharging the substance.

## Description

### FIELD OF THE INVENTION

The present invention relates to a device for discharging one or more substances (e.g. cooking ingredients) therefrom. In particular, the device may preferably be used with a mixing apparatus.

### BACKGROUND OF THE INVENTION

In many cooking exercises, it is very common that different ingredients are to be mixed together. One very common type of mixing requires adding one or more ingredients (e.g. solutes), which may be in the form of powder (e.g. flour), to a liquid base (e.g. water) and allowing them to dissolve in the liquid base and/or mixing them together to form a preferably smooth fluid mixture (e.g. batter).

One particular type of mixing requires adding a nutrient powder, which for example may contain a high protein content and other essential vitamins, to water, and blending them together to form a nutrient sports drink (e.g. "smoothie") for athletes. Since such nutrient sports drink (or blended fluid mixture) is often relatively thick and is for direct consumption by users, the requirement on the texture of the blended mixture is often very high. In particular, the nutrient powder should preferably be thoroughly mixed with the water such that the resultant blended fluid mixture should be as smooth as possible. If the nutrient powder were not thoroughly mixed with the water, there would be clumps in the mixture and consumption thereof would be unpleasant. There are also beliefs that if there were clumps in the blended fluid mixture, effective absorption of the nutrients in the drink would be hindered. Thus, a smooth and thoroughly blended fluid mixture without any clumps is much more desired and preferred by athletes. Yet, thoroughly mixing a powdered ingredient with a liquid base to produce a smooth blended fluid mixture with minimal or no clumps at all is often very difficult.

It is thus the object of the present invention to provide a solution to mitigate the above problem, or at least to provide an alternative to the public.

### SUMMARY OF THE INVENITON

According to a first aspect of the present invention, there is provided a device for discharging at least one substance therefrom, comprising a container having a body member with a substantially vertical wall and a closure member, the body member is provided with an upper opening via which the substance is received and a lower opening closable by the closure member, wherein the body member and the closure member together define a cavity for containing the substance and wherein the body member and the closure member are movable (or rotatable) relative to each other for discharging the substance. The device may be used independently or as an accessory for use with a mixing apparatus (e.g. blender).

Preferably, the closure member may be provided with a cutout region. The body may be rotatable in relation to the closure member between a first position in which the substance is contained in the cavity and in a second position in which the substance is dischargeable from the cavity via the cutout region. The closure member may be fixedly mounted in the device. Alternatively, the body member may be stationary and the closure member may be movable or rotatable in the device. It is to be noted that in the second position the substance may be discharged (or dischargeable) from the cavity of the container by gravity.

Preferably, the body member may be detachable from the device. This detachable feature is convenient for cleaning thereof after use.

The container may be provided with two or more of the cavities of equal or unequal capacity. Preferably, the container may be provided with measuring marks on its wall(s) for providing indication to users the amount of substances container or received therein. The container may also be provided with a receiving means for receiving substance added to the container and distributing the substance to the cavity/cavities.

The device may advantageously comprise a cam mechanism adapted to drive movement of the body in relation to the closure means. In particular, the cam mechanism may be adapted to drive rotation of the body member in one direction only. The device may comprise a triggering means adapted to operate the cam mechanism for driving the movement of the body member.

The device may be provided with a handle means for users to conveniently hold the device. The device may also be provided with means for holding the device and/or operating the cam mechanism.

Preferably, the container may be adapted to at least contain or discharge a powdered substance, and preferably be adapted to contain or discharge a semi-fluid substance, or even a liquid substance. In the case that the container contains a liquid substance, the rim defining the lower opening closable by the closure member is required to abut the closure member sufficiently tightly to prevent leakage and yet rotation of the container is not prevented.

The device may also comprise a housing within which the body member is fittable and/or moveable.

### BREIF DESCRIPTION OF THE DRAWINGS

The present invention will now be illustrated by way of example, with reference to the following figures, in which:
Figure 1 is a perspective view of a device for discharging a substance according to the present invention;
Figure 2 is a top view of the device shown in Figure 1;
Figure 3 is a perspective view of a body member of the device shown in Figure 1;
Figure 4 is a perspective view of the device shown in Figure 1 but without the body member shown in Figure 3;
Figure 5 is a perspective view of a portion of the device shown in Figure 1;
Figure 6 is a perspective view of the portion shown in Figure 5 but without a closure member;

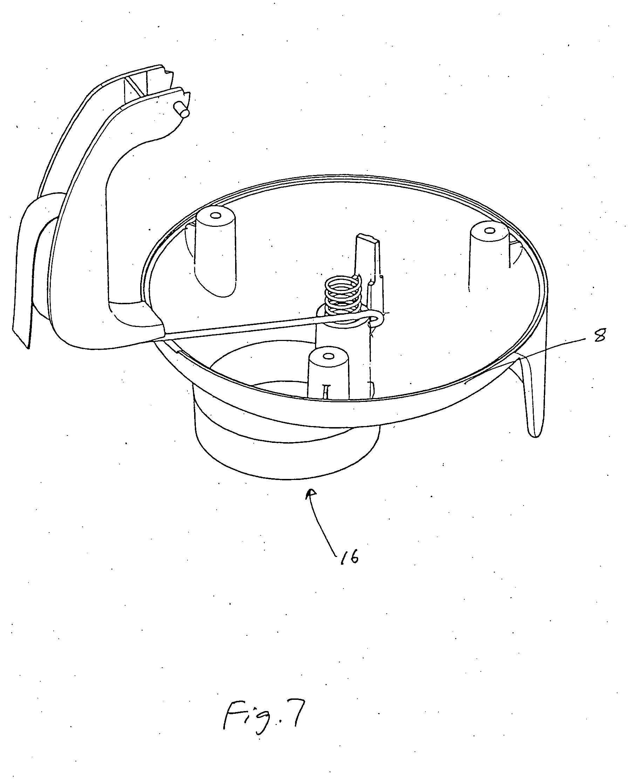

Figure 7 is a perspective view of the portion shown in Figure 5 but without a cam mechanism; and
Figure 8 is an exploded perspective view of the device shown in Figure 1.

### DETAILED DESCRIPTION OF A PREFERRED EMBODIMENT OF THE INVENTION

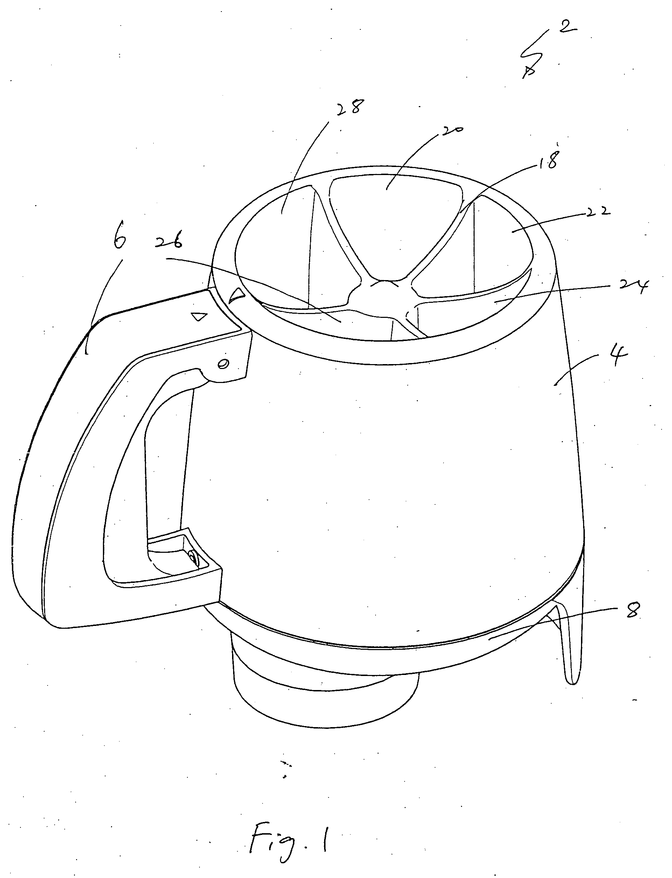

With reference to the drawings and in particular firstly to Figures 1, 2 and 8, a device for discharging an ingredient, generally designated as 2, according to an embodiment of the present invention essentially comprises a generally cylindrical housing 4 with a handle 6 attached thereto on a side thereof and a base 8.

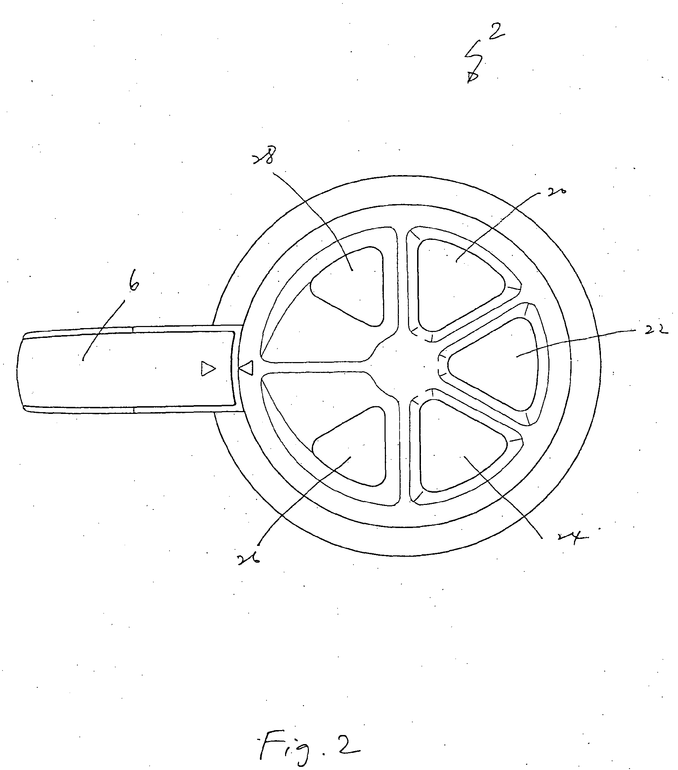

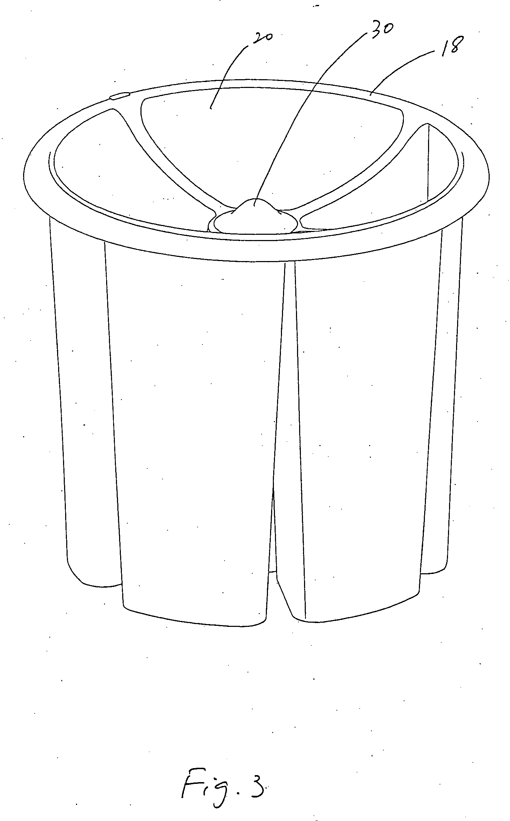

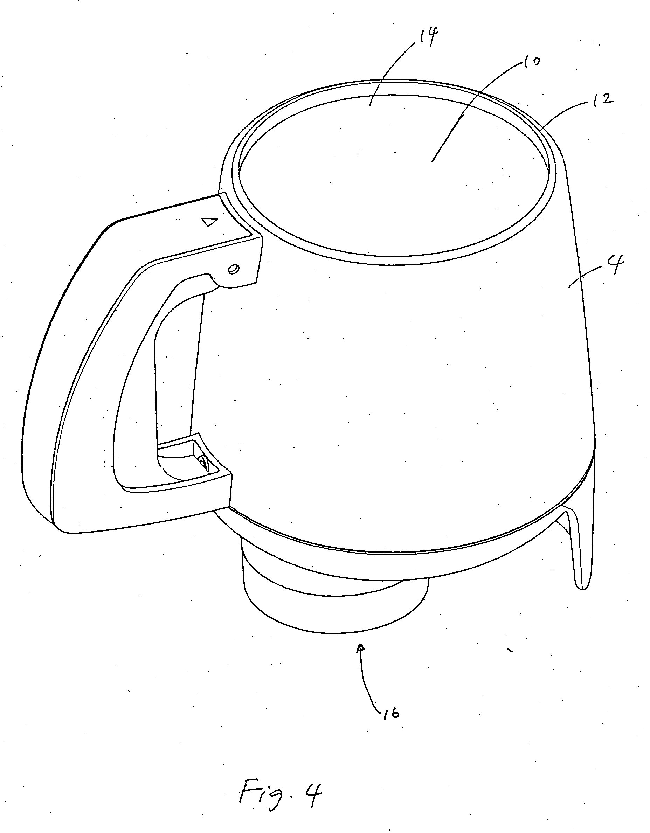

A hollow interior 10 is defined by the housing 4 of the device 2. The housing 4 is provided with an upper opening 14 and a lower opening 16, as shown in Figure 4. The device 2 comprises a body 18, as shown in Figures 1, 3 and 8, and a plate 32 which together with the body 18 define a cavity for containing one or more ingredients. The body 18 is sized and shaped to fit and rotate within the hollow interior 10 of the housing 4. The body 18 or its cavity is divided into five chambers 20, 22, 24, 26 and 28 by substantially vertical walls. As shown in Figure 2, while the shape of the chambers 20, 22, 24, 26 and 28 are not identical, their capacities for containing ingredients are identical in this embodiment. Although not shown in the figures, the chambers 20, 22, 24, 26 and 28 are provided with marks on their walls for indicating the quantity of ingredient(s) contained or received therein. Each of the five chambers 20, 22, 24, 26 and 28 has an upper opening, and the upper openings of the body are communicable with the upper opening 14 of the housing 4. Each of the five chambers 20, 22, 24, 26 and 28 of the body 18 has a lower opening, and the lower openings are communicable with the lower opening 16 of the housing 4. The body 18 is provided with a small protrusion 30 in the upper middle center thereof as shown in Figure 3.

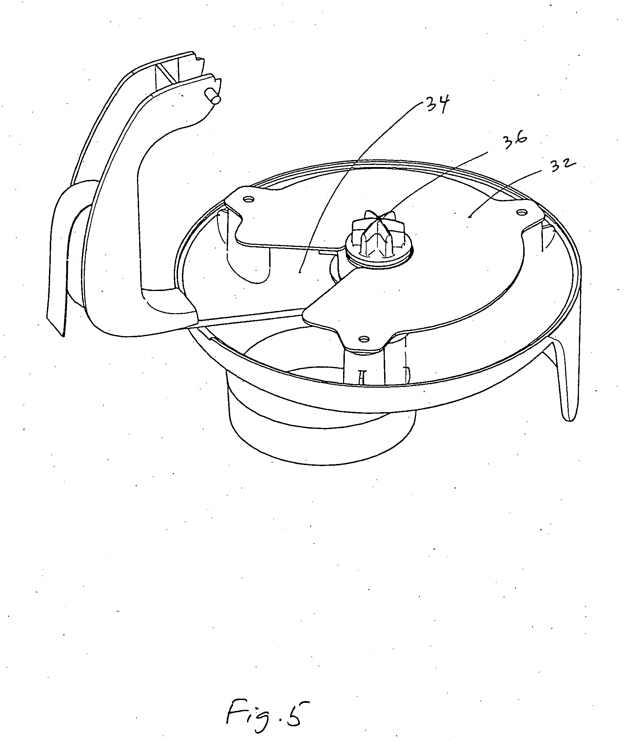

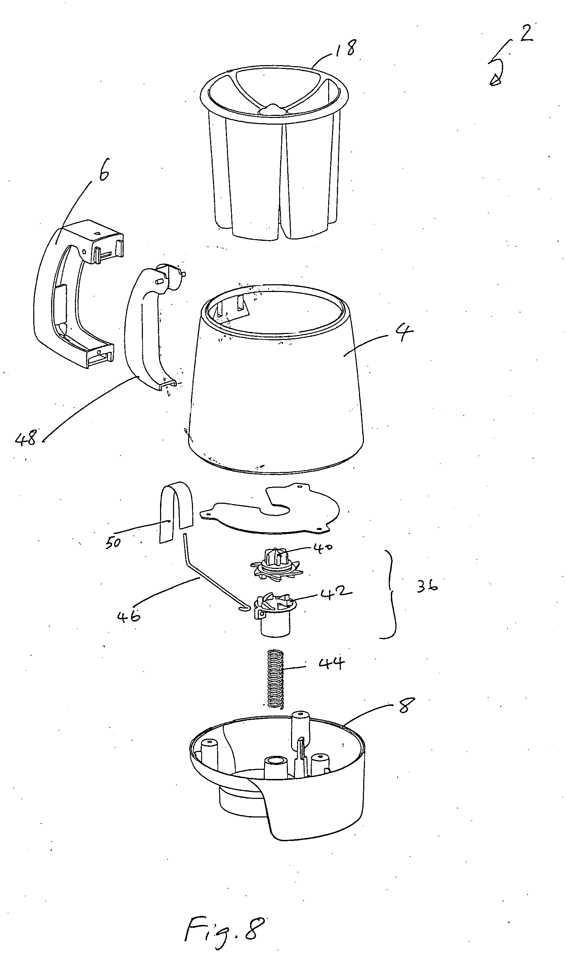

The housing 4 of the device 2 is provided with the generally circular horizontal plate 32 in the lower portion in the interior thereof, as shown in Figure 5. The plate 32 is fixedly mounted above the base 8 of the housing 4. The plate 32 is provided with a cutout region 34 adjacent to the handle 6, as shown in Figures 5 and 8. The lower opening 5 of the chambers 20, 22, 24, 26 and 28 are closable by the plate 32 such that they are not communicable with the lower opening 16 of the housing 4. Figure 5 also shows a portion of a cam mechanism 36 for controlling the movement of the body 18. The portion of the cam mechanism 36 extends from below the plate 32 via the center thereof. The device 2 is designed in such a way that when the body 18 is fitted within the housing 4 as shown in Figures 1 and 2, the lower end or rim of the chambers 20, 22, 24, 26 and 28 abuts the upper surface of the plate 32 and thus the lower openings thereof are closed by the plate 32. In this configuration, the chambers 20, 22, 24, 26 and 28 are ready to receive and an ingredient and contain it therein and the ingredient is not dischargeable via the opening 16.

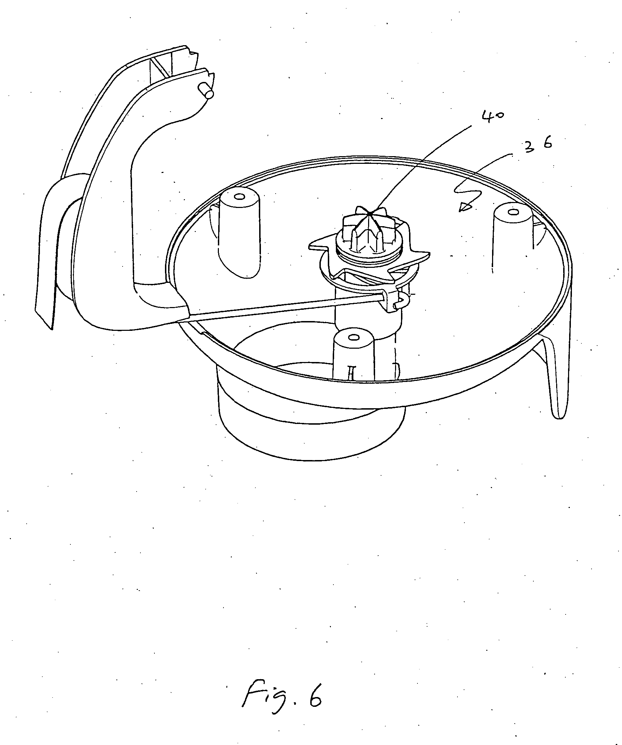

Figure 6 shows a portion of the device 2 with the plate 32 removed: Figure 6 and 8 show various components of the cam mechanism 36 and a triggering mechanism 38 for controlling the operation of the cam mechanism 36. The cam mechanism 36 comprises an upper cam member 40 engagable with a lower end of the body 18, a lower cam member 42 engagable with a lower end of the upper cam member 40, and a coil spring 44 fitted below the lower cam member 42 for upwardly biasing the cam members 40, 42.

The triggering means 38 comprises a lever 48 pivotably attached to the handle 6, a bar 46 connecting the lever 48 and the lower cam member 42 and a leaf spring 50 for biasing the lever 48 to a default position. The design of the cam mechanism 36 is such that the cam members 40, 42 are actuable to rotate in a clockwise direction on pressing the lever 48. As the cam members 40, 42 are caused to rotate, the body 18 engaged therewith is also caused to rotate in the same direction. On release of the lever 48, due to the particular configuration of the cam members 40, 42, teeth on the lower cam member 42 become out of engagement with teeth on the upper cam member 40 and the lower cam member 40 in itself will return to its default position and rotation of the lower cam member in anticlockwise direction when returning to the default position does not cause any rotation of the upper cam member 40 or the body 18. It is to be understood that the construction and the operation of the cam mechanism 36 described above is understood by a skilled person in the field.

In use, the body 18 is fitted within the housing 4 in a configuration as shown in Figure 1 in that the triangle mark on the handle 6 of the housing 4 matches the triangle mark on the body 18. This configuration is the configuration for filling the body 18 with an ingredient in that the lower openings of all the chambers are closed by the plate 32. The ingredient is then poured at the protrusion 30 of the body 18. Due to the particular shape and curvature of the protrusion 30, the ingredient is distributed to the five chambers essentially in equal portions. As described above, the body 18 is provided with marks for indicating the quantity of ingredient received in the body 18. Once the desired quantity of the ingredient is received in the body 18, the device 2 is, for example, placed over the opening of a blender filled with a liquid base (e.g. water). The lever 48 is then depressed and the body 18 is caused to rotate to a pre-determined extend such that the lower opening of the first chamber 26 matches with the cutout region 34 of the plate 32. In this configuration, a first lot of the ingredient in the first chamber is discharged via its opening and then the lower opening 16 by gravity into the blender which is blended with water therein. After the ingredient is thoroughly mixed with and/or dissolved with water in the blender, the lever 48 is depressed again and a second lot of the ingredient in the second chamber 24 is discharged in a similar fashion. After all the ingredient in the body 18 is alternately discharged and mixed with and/or dissolved with water, the mixture in the blender is ready for consumption. Since the ingredient is added to the water in the blender in lots and each lot is of relatively small quantity and thoroughly mixed with the water before the next lot is added, the device 2 is able to assist the production of a much more smoother drink for consumption.

It can be envisaged that each chamber of the body 18 may be sized and shaped differently so that they may have different capacities for containing different types of ingredient and/or different amount of ingredient.

## Claims

1. A device for discharging at least one substance therefrom, comprising a container having a body member with a substantially vertical wall and a closure member, said body member is provided with an upper opening via which the substance is received and a lower opening closable by said closure member, wherein said body member and said closure member together define a cavity for containing the substance and wherein said body member and said closure member are movable relative to each other for discharging the substance.

2. A device as claimed in Claim 2, wherein said closure member is provided with a cutout region.

3. A device as claimed in Claim 3, wherein said body member is rotatable between a first position in which the substance is contained in said cavity and in a second position in which the substance is dischargeable from said cavity via said cutout region.

4. A device as claimed in Claim 3, wherein in said second position the substance is dischargeable or discharged from said cavity by gravity.

5. A device as claimed in Claim 1, wherein said body member is detachable from said device.

6. A device as claimed in Claim 1, wherein said closure member is fixedly mounted therein.

7. A device as claimed in Claim 1, wherein said container is provided with two or more said cavities of equal capacity.

8. A device as claimed in Claim 1, wherein said container is provided with two or more said cavities of unequal capacity.

9. A device as claimed in Claim 1, comprising a cam mechanism adapted to drive movement of said body member in relation to said closure means.

10. A device as claimed in Claim 9, wherein said cam mechanism is adapted to drive rotation of said body member in one direction only.

11. A device as claimed in Claim 9, comprising a triggering means adapted to operate said cam mechanism.

12. A device as claimed in Claim 1, wherein said device is provided with a handle means.

13. A device as claimed in Claim 9, wherein said device is provided with means for holding said device and/or triggering said cam mechanism.

14. A device as claimed in Claim 1, wherein said container is adapted to contain or discharge a powdered substance.

15. A device as claimed in Claim 1, wherein said container is adapted to contain or discharge a semi-fluid substance.

16. A device as claimed in Claim 1, comprising a housing within which said body member is fittable and/or movable.
